# FASCICULE DE BREVET EUROPEEN

(11) **EP 3 107 751 B1**
(45) Date de publication et mention de la délivrance du brevet: **02.06.2021**
(21) Numéro de dépôt: 15709284.2
(22) Date de dépôt: 19.02.2015
(51) Int. Cl.: B60K 28/06

(54) **PROCÉDÉ ET DISPOSITIF D'ACQUISITION DE DONNÉES PROVENANT D'UN DISPOSITIF D'AUTORISATION DE DÉMARRAGE D'UN VÉHICULE, ET VÉHICULE COMPRENANT LEDIT DISPOSITIF**
VERFAHREN UND VORRICHTUNG FÜR DATENERFASSUNG AUS EINER FAHRZEUGSTARTAKTIVIERUNGSVORRICHTUNG UND FAHRZEUG MIT DIESER VORRICHTUNG
METHOD AND DEVICE FOR ACQUIRING DATA FROM A VEHICLE START ENABLING DEVICE, AND VEHICLE INCLUDING SAID DEVICE

(30) Priorité: 20.02.2014 FR 1451360
(43) Date de publication de la demande: 28.12.2016
(73) Titulaire: Alterlib, 95340 Persan (FR)
(72) Inventeur: SEQUEIRA, Fernando, F-95340 Persan (FR)
(74) Mandataire: Delorme, Nicolas
(86) Numéro de dépôt international: PCT/FR2015/050409
(87) Numéro de publication internationale: WO 2015/124874

(56) Documents cités:
- US-A1- 2013 021 153
- US-A1- 2013 169 442

## Description

La présente invention concerne le domaine de la sécurité routière, et se rapporte plus précisément à un procédé et à un dispositif d'acquisition de données provenant d'un dispositif d'autorisation de démarrage d'un véhicule, tel qu'un dispositif d'anti-démarrage par éthylotest électronique ou par contrôle de la consommation de stupéfiants. L'invention concerne également un véhicule comprenant un tel dispositif d'acquisition de données.

Dans le cadre de la lutte contre la conduite en état d'ivresse, le démarrage de certains véhicules peut être soumis à un contrôle préalable du taux d'alcoolémie du conducteur.

Peuvent notamment être soumis à un tel démarrage contrôlé les conducteurs de véhicules terrestres à moteur destinés à un usage public, tels que les conducteurs d'autobus ou d'autocar, les chauffeurs de taxi, les véhicules à neuf places et, plus généralement, tous les véhicules affectés au transport de personnes.

Dans certains cas, certains conducteurs de véhicule ayant fait l'objet d'une condamnation pour infraction pour conduite en état alcoolique peuvent également faire l'objet d'un contrôle du taux d'alcoolémie au démarrage. Ces conducteurs peuvent être contraints par décision de justice de se soumettre à un test d'alcoolémie pendant une période déterminée, à chaque démarrage de leur véhicule.

Dans l'un ou l'autre des cas précités, le contrôle du taux d'alcoolémie au démarrage peut être réalisé par un dispositif d'anti-démarrage par éthylotest, dispositif fréquemment désigné par l'acronyme « EAD » pour « éthylotest anti-démarrage ».

Un tel dispositif comprend un éthylotest, permettant de mesurer le taux d'alcoolémie du conducteur, relié à un anti-démarreur du véhicule, autorisant ou bloquant le démarrage du véhicule en fonction de la valeur retournée par l'éthylotest.

En outre, le dispositif d'anti-démarrage par éthylotest peut comprendre un interrupteur, librement accessible par le conducteur, adapté pour court-circuiter temporairement ledit dispositif. L'activation de cet interrupteur, autorisant un démarrage forcé du véhicule par un conducteur n'ayant pas procédé au dépistage de son imprégnation alcoolique, ne peut être tolérée qu'en cas de force majeure, pouvant par exemple survenir lorsque le transport en urgence d'une personne souffrante est nécessaire.

Les véhicules équipés de tels dispositifs d'anti-démarrage par éthylotest sont généralement fréquemment contrôlés, notamment afin de vérifier si l'interrupteur a été utilisé.

Le contrôle du dispositif EAD est réalisé soit directement sur le véhicule lui-même par un technicien, soit, comme décrit dans la demande de brevet FR 2 990 669, Z à distance.

Le document US 2013/169442 A1 divulge un procédé et un dispositif d'acquisition de données dans le contexte automobile.

Ce document de l'art antérieur se rapporte à un dispositif d'enregistrement des séquences de démarrage d'un véhicule à moteur.

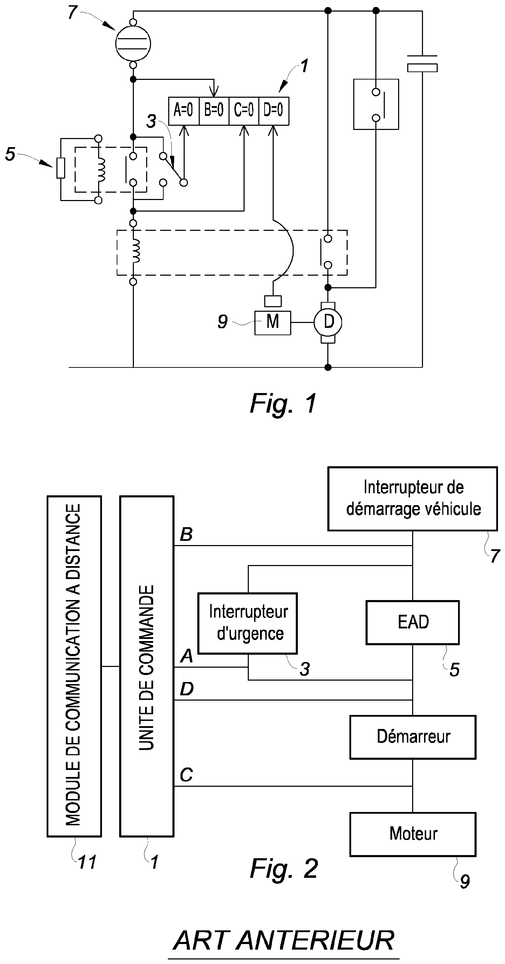

Ce dispositif, représenté schématiquement sur la figure 1, comprend une unité de commande 1 comportant quatre entrées A, B, C et D, respectivement reliées :
- à un interrupteur d'urgence 3 pour contourner un dispositif d'anti-démarrage 5,
- à l'interrupteur 7 de démarrage du véhicule,
- au dispositif d'anti-démarrage 5,
- au moteur du véhicule 9.

Cette unité de commande permet de savoir si au moins l'une des quatre entrées a fait l'objet d'une modification de potentiel électrique, correspondant à une action volontaire du conducteur. Lorsqu'une telle variation de potentiel électrique se produit sur l'une des entrées, la valeur booléenne de l'entrée concernée passe de 0 à 1, ou de 1 à 0.

Le dispositif d'enregistrement des séquences de démarrage du véhicule selon cet art antérieur comprend en outre un module de communication à distance 11 (visible sur la figure 2) de l'état logique des quatre entrées A, B, C, D de type GPRS. Ce module de communication est relié à la sortie du boîtier formant unité de commande 1 et permet la communication en temps réel vers un serveur distant des états bruts des entrées logiques du dispositif.

Pour plus de clarté, on a représenté sur la figure 2 un diagramme illustrant le fonctionnement du dispositif d'enregistrement des séquences de démarrage du véhicule selon l'art antérieur.

Comme on vient de le voir, un tel dispositif d'enregistrement des séquences de démarrage est installé sur le circuit électrique du moteur du véhicule et sur le moteur lui-même.

Le montage dans le véhicule de ce type de dispositif est complexe et nécessite obligatoirement l'intervention d'un technicien qualifié sur le circuit électrique du moteur et sur le moteur du véhicule.

Outre la durée d'intervention du technicien sur le véhicule, relativement longue, le coût d'une telle intervention se trouve élevé.

De plus, en raison de cette complexité de montage et afin de limiter l'encombrement d'un tel dispositif sur le véhicule qui en est équipé, le nombre d'entrées logiques de l'unité de commande est limité à quatre, limitant en conséquence à quatre le nombre maximal d'informations qu'il est possible d'acquérir avec ce dispositif, ces données étant relatives à l'activation d'un interrupteur d'urgence, à l'activation d'un interrupteur de démarrage du véhicule, au fonctionnement du dispositif d'anti-démarrage et à la mise en marche du moteur du véhicule.

En raison de ce nombre relativement limité de données que l'on peut acquérir, la fiabilité de ce dispositif de l'art antérieur est relativement faible.

La présente invention vise à résoudre ces inconvénients, et concerne pour ce faire un procédé d'acquisition de données provenant d'un dispositif d'autorisation de démarrage d'un véhicule, tel qu'un dispositif d'anti-démarrage par éthylotest électronique ou par contrôle de la consommation de stupéfiants, comprenant en outre les étapes suivantes visant à :
- connecter un dispositif de transmission de données en temps réel directement sur le dispositif d'autorisation de démarrage du véhicule ;
- établir une communication entre le dispositif de transmission de données et le dispositif d'autorisation de démarrage du véhicule, ladite communication étant réalisée par un micrologiciel équipant ledit dispositif d'autorisation de démarrage du véhicule et/ou ledit dispositif de transmission de données ;
- récupérer des données provenant du dispositif d'autorisation de démarrage du véhicule par le dispositif de transmission de données ;
- transmettre lesdites données récupérées vers un serveur distant.

Ainsi, en établissant une communication directe entre le dispositif de transmission de données et le dispositif d'autorisation de démarrage du véhicule, on parvient à récupérer directement des informations du dispositif d'autorisation de démarrage du véhicule, contrairement à l'art antérieur qui prévoit l'utilisation d'une unité de commande intermédiaire.

On autorise ainsi une transmission d'un plus grand nombre de données, relatives à un nombre plus important de caractéristiques liées à une tentative de démarrage de véhicule.

Cela permet avantageusement d'augmenter la sécurité du dispositif anti-démarrage relié à l'éthylotest ou au dispositif de contrôle de la consommation de stupéfiants, et ainsi de limiter considérablement le risque de contournement abusif du contrôle d'alcoolémie au démarrage, ou d'interdire une personne qui aurait consommé des stupéfiants de pouvoir démarrer son véhicule.

En outre, le procédé selon l'invention simplifie considérablement le montage selon l'art antérieur, en ce qu'il n'est plus nécessaire d'avoir recours à un technicien spécialisé lorsque l'on souhaite installer le dispositif de transmission de données sur le dispositif d'autorisation de démarrage du véhicule.

Par ailleurs, en prévoyant de développer un micrologiciel (de type « firmware » en terminologie anglo-saxonne) équipant l'un et/ou l'autre des dispositifs, d'autorisation de démarrage du véhicule et/ou de transmission de données, on autorise une communication simple et directe entre lesdits dispositifs.

Dans le cas où seul le dispositif d'autorisation de démarrage du véhicule, respectivement de transmission de données, en est équipé, il permet une communication avec un type de dispositif de transmission de données particulier, respectivement avec un dispositif d'autorisation de démarrage du véhicule particulier.

Lorsque les dispositifs d'autorisation de démarrage du véhicule et de transmission de données sont tous deux équipés du micrologiciel selon l'invention, la communication entre lesdits dispositifs est directe et est très avantageusement universelle.

En outre, un tel micrologiciel permet d'écrire directement dans la mémoire du dispositif d'autorisation de démarrage et/ou du dispositif de transmission de données, ce qui permet de limiter toute modification frauduleuse externe du micrologiciel et, *in fine,* d'augmenter la sécurité du dispositif d'acquisition de données selon l'invention.

Optionnellement, le procédé selon l'invention comprend en outre une étape visant à récupérer directement des données du dispositif de transmission de données.

Cela permet avantageusement de disposer à distance de données propres au dispositif de transmission de données.

Avantageusement, le dispositif de transmission de données récupère au moins trente-deux données provenant du dispositif d'autorisation de démarrage du véhicule.

Optionnellement, les données récupérées sont comprises dans les catégories d'informations suivantes :
- authentification du dispositif de transmission de données avec le serveur distant ;
- identification du numéro des dispositifs de transmission de données et d'autorisation de démarrage ;
- localisation du véhicule, par exemple par données GPRS ;
- relevé de la date et de l'heure de la mise sous tension des dispositifs d'autorisation de démarrage et de transmission de données ;
- relevé du kilométrage du véhicule ;
- données du dispositif d'autorisation de démarrage.

L'invention se rapporte également à un dispositif d'acquisition de données comprenant :
- un dispositif d'autorisation de démarrage d'un véhicule, tel qu'un dispositif d'anti-démarrage par éthylotest électronique ou par contrôle de la consommation de stupéfiants,
- un dispositif de transmission de données en temps réel adapté pour communiquer avec un serveur distant,
des moyens de communication directe entre le dispositif d'autorisation de démarrage et le dispositif de transmission de données en temps réel, ledit dispositif d'acquisition de données étant remarquable en ce que les moyens de communication entre le dispositif de transmission de données en temps réel et le dispositif d'autorisation de démarrage comprennent au moins un micrologiciel adapté pour autoriser la communication entre lesdits dispositifs, équipant le dispositif d'autorisation de démarrage du véhicule et/ou le dispositif de transmission de données.

Ainsi, en prévoyant des moyens de communication directe entre le dispositif d'autorisation de démarrage et le dispositif de transmission de données en temps réel, aucun organe intermédiaire entre ces deux dispositifs n'est à prévoir, c'est-à-dire que la communication entre ces dispositifs est universelle, ce qui permet avantageusement de simplifier le montage d'un tel dispositif d'acquisition de données par rapport à l'art antérieur.

Par ailleurs, les moyens de communication entre le dispositif de transmission de données en temps réel et le dispositif d'autorisation de démarrage comprennent en outre des moyens de liaison filaire entre le dispositif d'autorisation de démarrage du véhicule et le dispositif de transmission de données.

Très avantageusement, il est à présent possible de connecter via un moyen de liaison filaire le dispositif de transmission de données en temps réel directement sur le dispositif d'autorisation de démarrage du véhicule.

De manière optionnelle, le dispositif de transmission de données en temps réel communique avec le serveur distant par un protocole choisi dans le groupe suivant : GSM, GPRS, EDGE, UMTS, LTE, Wi-Fi.

Enfin, la présente invention concerne un véhicule comprenant un dispositif d'acquisition de données selon l'invention.

D'autres caractéristiques, buts et avantages de la présente invention apparaîtront à la lecture de la description qui va suivre et à l'examen des figures ci-annexées, dans lesquelles :
- la figure 1 illustre l'architecture d'un dispositif d'enregistrement des séquences de démarrage d'un véhicule à moteur selon l'art antérieur ;
- la figure 2 est un diagramme représentant le fonctionnement du dispositif d'enregistrement selon l'art antérieur ;
- la figure 3 est un diagramme illustrant le fonctionnement du dispositif d'acquisition de données selon l'invention.

Sur l'ensemble des figures, des références identiques ou analogues désignent des organes ou ensembles d'organes identiques ou analogues.

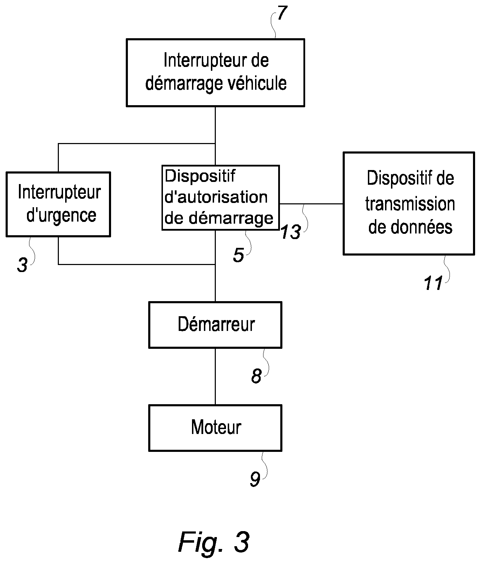

On se réfère à la figure 3, illustrant un diagramme de fonctionnement du dispositif d'acquisition de données selon l'invention.

De façon connue, un véhicule équipé d'un dispositif d'autorisation de démarrage 5 comprend classiquement un interrupteur électrique 7 de démarrage du véhicule, conformé pour être actionné par l'intermédiaire d'une clé de contact. L'interrupteur électrique est relié audit dispositif d'autorisation de démarrage 5, lui-même relié à un démarreur 8 connecté au moteur 9 du véhicule.

Selon l'invention, le dispositif d'autorisation de démarrage est constitué par tout dispositif de dépistage d'une substance quelconque préalablement consommée par le conducteur. A titre d'exemple non limitatif, le dispositif d'autorisation de démarrage est constitué par un dispositif d'anti-démarrage par éthylotest électronique, fréquemment désigné par l'acronyme « EAD » pour « éthylotest anti-démarrage », ou par un dispositif de contrôle de la consommation de stupéfiants.

Lorsque l'interrupteur électrique 7 de démarrage est actionné par la clé de contact, un signal électrique est envoyé au dispositif d'autorisation de démarrage 5. Le dispositif d'autorisation de démarrage est adapté pour autoriser ou bloquer le passage du courant alimentant le démarreur 8 du moteur 9, en fonction de la valeur retournée par l'éthylotest ou par le dispositif de contrôle de la consommation de stupéfiants.

Un interrupteur électrique d'urgence 3 est connecté entre l'interrupteur électrique 7 de démarrage du véhicule et le démarreur 8 du moteur 9. L'activation de cet interrupteur électrique d'urgence permet de transmettre un signal électrique provenant de l'interrupteur de démarrage directement au démarreur du moteur sans actionner le dispositif d'autorisation de démarrage. En conséquence, lorsque l'interrupteur électrique d'urgence est activé lorsqu'une procédure de démarrage d'urgence est nécessaire, le démarrage instantané du véhicule est autorisé.

Le dispositif d'acquisition de données comprend en outre un dispositif de transmission de données en temps réel 11, adapté pour communiquer avec un serveur distant (non représenté), par transmission d'ondes radioélectriques aptes à communiquer avec ledit serveur par exemple selon les protocoles GSM, GPRS, EDGE, UMTS, LTE. L'homme du métier peut également bien entendu choisir d'autres protocoles de communication, notamment Wi-Fi par exemple.

Selon l'invention, le dispositif d'autorisation de démarrage 5 et le dispositif de transmission de données en temps réel 11 comprennent des moyens de communication directe entre eux.

Ces moyens de communication comprennent un moyen de liaison filaire entre le dispositif d'autorisation de démarrage 5 du véhicule et le dispositif de transmission de données 11, et un micrologiciel adapté pour autoriser la communication entre lesdits dispositifs.

Un tel moyen de liaison filaire est réalisé par un câble électrique 13, par exemple du type « 4 broches/RS232 » ou encore du type « RJ 45 ». D'autres câbles électriques peuvent bien entendu être utilisés si l'homme du métier y trouve un intérêt particulier. Un port conformé pour supporter le type de câble retenu équipe le dispositif de transmission de données en temps réel 11 et le dispositif d'autorisation de démarrage 5. A titre d'exemple, le câble électrique 13, du type « 4 broches/RS232 », coopère avec un port 4 broches équipant le dispositif d'autorisation de démarrage et avec un port RS232 équipant le dispositif de transmission de données.

Selon une première variante de réalisation de l'invention, un micrologiciel équipe le dispositif d'autorisation de démarrage.

Ce micrologiciel, adapté pour autoriser la communication entre le dispositif d'autorisation de démarrage et le dispositif de transmission de données, est du type « firmware » en terminologie anglo-saxonne.

Le langage de programmation du micrologiciel est propre au dispositif d'autorisation de démarrage et/ou au dispositif de transmission de données. A titre d'exemple non limitatif, le langage de programmation du micrologiciel est un langage C.

Les avantages d'un micrologiciel de type « firmware » sont nombreux. Un tel micrologiciel permet par exemple d'écrire directement dans la mémoire du dispositif d'autorisation de démarrage et/ou du dispositif de transmission de données, ce qui permet de limiter toute modification frauduleuse externe du micrologiciel et, *in fine,* d'augmenter la sécurité du dispositif d'acquisition de données selon l'invention.

Le micrologiciel installé sur le dispositif d'autorisation de démarrage est développé pour communiquer avec le dispositif de transmission de données auquel il est relié.

Le port installé sur le dispositif d'autorisation de démarrage est relié au micrologiciel, tandis que le port installé sur le dispositif de transmission de données est relié au processeur dudit dispositif.

Selon une deuxième variante de réalisation de l'invention, le micrologiciel équipe le dispositif de transmission de données et, dans ce cas, est développé pour communiquer avec le dispositif d'autorisation de démarrage auquel il est relié. Le port installé sur le dispositif de transmission de données est relié au micrologiciel, tandis que le port installé sur le dispositif d'autorisation de démarrage est relié au processeur dudit dispositif.

Selon une troisième variante, le micrologiciel équipe à la fois les dispositifs d'autorisation de démarrage et de transmission de données, ce qui permet, très avantageusement, de conférer un caractère universel au dispositif d'acquisition de données selon l'invention.

Les ports équipant les dispositifs d'autorisation de démarrage et de transmission de données sont chacun reliés à leur micrologiciel respectif.

Le procédé d'acquisition de données selon l'invention fonctionne de la façon suivante.

Lorsque l'on souhaite acquérir des données provenant d'un dispositif d'autorisation de démarrage 5 d'un véhicule, on connecte un dispositif de transmission de données en temps réel 11 directement sur le dispositif d'autorisation de démarrage du véhicule.

La connexion entre ces deux dispositifs est réalisée comme précédemment décrit au moyen d'un câble 13 de liaison électrique reliant directement entre eux les dispositifs d'autorisation de démarrage et de transmission de données.

On établit ensuite une communication entre le dispositif de transmission de données et le dispositif d'autorisation de démarrage du véhicule par un micrologiciel de type « firmware » équipant le dispositif d'autorisation de démarrage du véhicule et/ou le dispositif de transmission de données.

Le dispositif d'acquisition de données selon l'invention récupère les données dont dispose le dispositif d'autorisation de démarrage du véhicule via le dispositif de transmission de données, et récupère également des données propres au dispositif de transmission de données. La liste non exhaustive des données récupérées sont relatives aux catégories d'informations suivantes :
- authentification du dispositif de transmission de données avec le serveur distant ;
- identification du numéro des dispositifs de transmission de données et d'autorisation de démarrage ;
- localisation du véhicule, par exemple par données GPRS ;
- relevé de la date et de l'heure de la mise sous tension des dispositifs d'autorisation de démarrage et de transmission de données ;
- relevé du kilométrage du véhicule ;
- données du dispositif d'autorisation de démarrage ;
- vitesse du véhicule ;
- direction de déplacement du véhicule ;
- altitude du véhicule.

Les données récupérées par le dispositif de transmission de données dont dispose le dispositif d'autorisation démarrage du véhicule sont, de manière préférée mais non limitative, au nombre de trente-deux, et sont comprises dans le groupe suivant : « VBS allumé », « Souffle initial positif », « Souffle secondaire positif », « Souffle initial négatif », « Souffle secondaire négatif », « Bouton de démarrage d'urgence enclenché », « Période d'urgence commencée », « Période d'urgence terminée », « Période de dérogation d'urgence commencée », « Demande d'échantillon forcée », « Souffle aléatoire demandée », « Temps d'appel expiré », « Contournement-souffle associé » « Contournement-Aspiration », « Contournement-Souffle trop fort », « Système ré-armé-temps de démarrage expiré », « Système ré-armé-temps de redémarrage expiré », « TAB connecté », « Changement de conducteur demandé », « Changement de conducteur réussi », « Changement de conducteur échec », « Demande de changement de conducteur », « Souffle manuel », « Réussite après appel aléatoire expiré », « Réussite après changement de conducteur appel expiré », « Erreur après appel aléatoire expiré », « Erreur après changement de conducteur appel expiré », « Contournement-souffle insuffisant », « Porte ouverte », « Contact allumé », « Contact éteint », « Base d'information effacée ».

Le dispositif de transmission de données, communiquant avec un serveur distant par transmission d'ondes radioélectriques grâce à un protocole de communication du type GSM, GPRS, EDGE, UMTS, LTE, transmet en temps réel les données récupérées directement sur le dispositif d'autorisation de démarrage du véhicule vers un serveur distant.

Le serveur distant comprend des moyens de stockage des données récupérées. Les données récupérées peuvent alors faire l'objet d'un traitement à distance soit par le gestionnaire de la société qui emploie les chauffeurs de véhicule à usage public ou soit, dans le cadre d'une application d'une peine complémentaire ou d'une peine alternative prononcée suite à un contrôle du taux d'alcoolémie, par le procureur de la République.

Grâce à la présente invention, contrairement à l'art antérieur, on ne prélève aucun signal électrique du moteur, mais on récupère directement les informations dont dispose le dispositif d'autorisation de démarrage. Cette récupération directe d'informations est rendu possible grâce aux moyens de communication du dispositif selon l'invention, équipant le dispositif d'autorisation de démarrage et le dispositif de transmission de données.

La présente invention est particulièrement avantageuse en ce qu'elle permet, d'une part, d'éviter l'installation d'une unité de commande supplémentaire entre le dispositif d'autorisation de démarrage et le dispositif de transmission de données et, d'autre part, d'augmenter sensiblement par rapport à l'art antérieur le nombre de données que l'on récupère relatives au comportement du conducteur.

En augmentant de la sorte le nombre de données que l'on récupère, on améliore par rapport à l'art antérieur la fiabilité du dispositif d'acquisition de données provenant d'un dispositif d'autorisation de démarrage, et on réduit considérablement les risques de contournement abusif du dispositif.

## Revendications

1. Procédé d'acquisition de données provenant d'un dispositif d'autorisation de démarrage (5) d'un véhicule, tel qu'un dispositif d'anti-démarrage par éthylotest électronique ou par contrôle de la consommation de stupéfiants, comprenant en outre les étapes suivantes visant à :
• connecter un dispositif de transmission de données en temps réel (11) directement sur le dispositif d'autorisation de démarrage (5) du véhicule ;
• établir une communication entre le dispositif de transmission de données (11) et le dispositif d'autorisation de démarrage (5) du véhicule, ladite communication étant réalisée par un micrologiciel équipant ledit dispositif d'autorisation de démarrage du véhicule et/ou ledit dispositif de transmission de données ;
• écrire directement dans la mémoire du dispositif d'autorisation de démarrage et/ou du dispositif de transmission de données, ladite écriture étant réalisée par le micrologiciel équipant ledit dispositif d'autorisation de démarrage du véhicule et/ou ledit dispositif de transmission de données ;
• récupérer des données provenant du dispositif d'autorisation de démarrage du véhicule (5) par le dispositif de transmission de données (11) ;
• transmettre lesdites données récupérées vers un serveur distant.

2. Procédé d'acquisition de données selon la revendication 1, **caractérisé en ce qu'**il comprend en outre une étape visant à récupérer directement des données du dispositif de transmission de données.

3. Procédé d'acquisition de données selon l'une des revendications 1 ou 2, **caractérisé en ce que** le dispositif de transmission de données (11) récupère au moins trente-deux données provenant du dispositif d'autorisation de démarrage (5) du véhicule.

4. Procédé d'acquisition de données selon l'une des revendications 2 ou 3, **caractérisé en ce que** les données récupérées sont comprises dans les catégories d'informations suivantes :
• authentification du dispositif de transmission de données avec le serveur distant ;
• identification du numéro des dispositifs de transmission de données et d'autorisation de démarrage ;
• localisation du véhicule, par exemple par données GPRS ;
• relevé de la date et de l'heure de la mise sous tension des dispositifs d'autorisation de démarrage et de transmission de données ;
• relevé du kilométrage du véhicule ;
• données du dispositif d'autorisation de démarrage.

5. Dispositif d'acquisition de données comprenant :
• un dispositif d'autorisation de démarrage (5) d'un véhicule, tel qu'un dispositif d'anti-démarrage par éthylotest électronique ou par contrôle de la consommation de stupéfiants,
• un dispositif de transmission de données en temps réel (11) adapté pour communiquer avec un serveur distant,
• des moyens de communication directe entre le dispositif d'autorisation de démarrage et le dispositif de transmission de données en temps réel,
ledit dispositif d'acquisition de données étant **caractérisé en ce que** les moyens de communication entre le dispositif de transmission de données en temps réel et le dispositif d'autorisation de démarrage comprennent au moins un micrologiciel adapté pour autoriser la communication entre lesdits dispositifs, équipant le dispositif d'autorisation de démarrage (5) du véhicule et/ou le dispositif de transmission de données (11), le micrologiciel étant adapté pour écrire directement dans la mémoire du dispositif d'autorisation de démarrage et/ou du dispositif de transmission de données.

6. Dispositif d'acquisition de données selon la revendication 6, **caractérisé en ce que** les moyens de communication entre le dispositif de transmission de données en temps réel et le dispositif d'autorisation de démarrage comprennent en outre des moyens de liaison filaire entre le dispositif d'autorisation de démarrage (5) du véhicule et le dispositif de transmission de données (11).

7. Dispositif d'acquisition de données selon l'une des revendications 5 ou 6, **caractérisé en ce que** le dispositif de transmission de données en temps réel (11) communique avec le serveur distant par un protocole choisi dans le groupe suivant : GSM, GPRS, EDGE, UMTS, LTE, Wi-Fi.

8. Véhicule comprenant un dispositif d'acquisition de données selon l'une quelconque des revendications 5 à 7.

## Patentansprüche

1. Verfahren zur Datenerfassung aus einer Startaktivierungsvorrichtung (5) eines Fahrzeugs, wie einer Wegfahrsperrvorrichtung durch elektronischen Alkotest oder durch Kontrolle des Konsums von Betäubungsmitteln, weiter die folgenden Schritte umfassend, die auf Folgendes abzielen:
• Verbinden einer Datenübertragungsvorrichtung in Echtzeit (11) direkt mit der Startaktivierungsvorrichtung (5) des Fahrzeugs;
• Aufbauen einer Kommunikation zwischen der Datenübertragungsvorrichtung (11) und der Startaktivierungsvorrichtung (5) des Fahrzeugs, wobei die Kommunikation durch eine Firmware realisiert wird, mit der die Startaktivierungsvorrichtung des Fahrzeugs und/oder die Datenübertragungsvorrichtung ausgerüstet ist;
• Schreiben direkt in den Speicher der Startaktivierungsvorrichtung und/oder die Datenübertragungsvorrichtung, wobei das Schreiben durch die Firmware realisiert wird, mit der die Startaktivierungsvorrichtung des Fahrzeugs und/oder die Datenübertragungsvorrichtung ausgerüstet ist;
• Abrufen der Daten aus der Startaktivierungsvorrichtung (5) des Fahrzeugs durch die Datenübertragungsvorrichtung (11);
• Übertragen der abgerufenen Daten zu einem ausgelagerten Server.

2. Verfahren zur Datenerfassung nach Anspruch 1, **dadurch gekennzeichnet, dass** es weiter einen Schritt umfasst, der darauf abzielt, direkt Daten aus der Datenübertragungsvorrichtung abzurufen.

3. Verfahren zur Datenerfassung nach einem der Ansprüche 1 oder 2, **dadurch gekennzeichnet, dass** die Datenübertragungsvorrichtung (11) mindestens zweiunddreißig Daten abruft, die aus der Startaktivierungsvorrichtung (5) des Fahrzeugs stammen.

4. Verfahren zur Datenerfassung nach einem der Ansprüche 2 oder 3, **dadurch gekennzeichnet, dass** die abgerufenen Daten in den folgenden Informationskategorien enthalten sind:
• Authentifizierung der Datenübertragungsvorrichtung mit dem ausgelagerten Server;
• Identifikation der Nummer der Datenübertragungs- und Startaktivierungsvorrichtungen;
• Lokalisierung des Fahrzeugs, beispielsweise durch GPRS-Daten;
• Erhebung des Datums und der Uhrzeit des Einschaltens der Startaktivierungs- und Datenübertragungsvorrichtungen;
• Erhebung des Kilometerstandes des Fahrzeugs;
• Daten der Startaktivierungsvorrichtung.

5. Vorrichtung zur Datenerfassung, Folgendes umfassend:
• eine Startaktivierungsvorrichtung (5) eines Fahrzeugs, wie eine Wegfahrsperrvorrichtung durch elektronischen Alkotest oder durch Kontrolle des Konsums von Betäubungsmitteln,
• eine Datenübertragungsvorrichtung in Echtzeit (11), die angepasst ist, um mit einem ausgelagerten Server zu kommunizieren,
• Mittel zur direkten Kommunikation zwischen der Startaktivierungsvorrichtung und der Datenübertragungsvorrichtung in Echtzeit,
wobei die Vorrichtung zur Datenerfassung **dadurch gekennzeichnet ist, dass** die Kommunikationsmittel zwischen der Datenübertragungsvorrichtung in Echtzeit und der Startaktivierungsvorrichtung mindestens eine Firmware umfassen, die angepasst ist, um die Kommunikation zwischen den Vorrichtungen zu erlauben, mit der die Startaktivierungsvorrichtung (5) des Fahrzeugs und/oder die Datenübertragungsvorrichtung (11) ausgerüstet ist, wobei die Firmware angepasst ist, um direkt in den Speicher der Startaktivierungsvorrichtung und/oder der Datenübertragungsvorrichtung zu schreiben.

6. Vorrichtung zur Datenerfassung nach Anspruch 6, **dadurch gekennzeichnet, dass** die Kommunikationsmittel zwischen der Datenübertragungsvorrichtung in Echtzeit und der Startaktivierungsvorrichtung weiter Mittel zur Drahtverbindung zwischen der Startaktivierungsvorrichtung (5) des Fahrzeugs und der Datenübertragungsvorrichtung (11) umfassen.

7. Vorrichtung zur Datenerfassung nach einem der Ansprüche 5 oder 6, **dadurch gekennzeichnet, dass** die Datenübertragungsvorrichtung in Echtzeit (11) mit dem ausgelagerten Server durch ein Protokoll kommuniziert, das aus der folgenden Gruppe ausgewählt ist: GSM, GPRS, EDGE, UMTS, LTE, WLAN.

8. Fahrzeug, eine Vorrichtung zur Datenerfassung nach einem der Ansprüche 5 bis 7 umfassend.

## Claims

1. A method for acquiring data from a device (5) for enabling the start of a vehicle, such as an immobilizer device by electronic breathalyzer or by control of the consumption of narcotics, further comprising the following steps aimed at:
• connecting a real-time data transmission device (11) directly on the device (5) for enabling the start of the vehicle;
• establishing a communication between the data transmission device (11) and the device (5) for enabling the start of the vehicle, said communication being carried out by firmware equipping said device for enabling the start of the vehicle and/or said data transmission device;
• writing directly to the memory of the start enabling device and/or the data transmission device, said writing being carried out by the firmware equipping said device for enabling the start of the vehicle and/or said data transmission device;
• recovering data from the device (5) for enabling the start of the vehicle by the data transmission device (11);
• transmitting said recovered data to a remote server.

2. The data acquisition method according to claim 1, **characterized in that** it further comprises a step aimed at directly recovering data from the data transmission device.

3. The data acquisition method according to any of claims 1 or 2, **characterized in that** the data transmission device (11) recovers at least thirty-two data from the device (5) for enabling the start of the vehicle.

4. The data acquisition method according to any of claims 2 or 3, **characterized in that** the recovered data is comprised in the following categories of information:
• authentication of the data transmission device with the remote server;
• identification of the number of the data transmission and start enabling devices;
• location of the vehicle, for example by GPRS data;
• record of the date and time of the power-on of the start enabling and data transmission devices;
• record of the vehicle mileage;
• data of the start enabling device.

5. A data acquisition device comprising:
• a device (5) for enabling the start of a vehicle, such as an immobilizer device by electronic breathalyzer or by control of the consumption of narcotics,
• a real-time data transmission device (11) adapted to communicate with a remote server,
• means of direct communication between the start enabling device and the real-time data transmission device,
said data acquisition device being **characterized in that** the means of communication between the real-time data transmission device and the start enabling device comprise at least one firmware adapted to enable the communication between said devices, equipping the device (5) for enabling the start of the vehicle and/or the data transmission device (11), the firmware being adapted to write directly to the memory of the start enabling device and/or the data transmission device.

6. The data acquisition device according to claim 6, **characterized in that** the means of communication between the real-time data transmission device and the start enabling device further comprise means of wired connection between the device (5) for enabling the start of the vehicle and the data transmission device (11).

7. The data acquisition device according to any of claims 5 or 6, **characterized in that** the real-time data transmission device (11) communicates with the remote server by a protocol selected from the following group: GSM, GPRS, EDGE, UMTS, LTE, Wi-Fi.

8. A vehicle comprising a data acquisition device according to any one of claims 5 to 7.
